# EUROPÄISCHE PATENTANMELDUNG

(11) **EP 0 656 599 A2**
(43) Veröffentlichungstag der Anmeldung: **07.06.1995**
(21) Anmeldenummer: 94116794.2
(22) Anmeldetag: 25.10.1994
(51) Int. Cl.: G06K 7/10

(54) **Transponder und Datenkommunikationsystem**

(30) Priorität: 04.11.1993 DE 4337637
(71) Anmelder: Licentia Patent-Verwaltungs-GmbH, D-60596 Frankfurt (DE)
(72) Erfinder: Peters, Andreas, Dr., D-89081 Ulm (DE); Hecht, Johannes, D-89233 Neu-Ulm (DE)
(74) Vertreter: Weber, Gerhard, Dipl.-Phys.

(57) **Zusammenfassung**

Es wird ein Transponder sowie ein Datenkommunikationssystem mit einem solchen Transponder beschrieben, mit welchem auch in Fällen des gleichzeitigen Vorliegens mehrerer Transponder im Feldbereich des Lesegeräts auf einfache Weise eine Identifikation und/oder individuelle Ansprechbarkeit der gleichzeitig vorhandenen Transponder gewährleistet ist.

## Beschreibung

Die vorliegende Erfindung betrifft einen Transponder nach dem Oberbegriff des Patentanspruchs 1 und ein Datenkommunikationssystem mit solchen Transpondern.

Ein solcher Transponder mit dazugehörigem Lesegerät ist z.B. in dem Prospekt "Elektronische Identifikation System Trovan" der Firma AEG Aktiengesellschaft, Ulm vom Juni 1992 beschrieben. Der dort beschriebene Transponder besitzt einen Festcodespeicher als Nutzspeicher. Befindet sich der Transponder im Feldbereich des Lesegeräts, so wird er zur Aussendung seines Nutzspeicherinhalts angeregt und ist dadurch für das Lesegerät identifizierbar.

In Anwendungsfällen, wo sich mehrere Transponder gleichzeitig im Feldbereich des Lesegeräts befinden können, arbeitet diese einfache Anordnung nicht mit ausreichender Zuverlässigkeit, da zumindest ohne wesentlichen Zusatzaufwand i.a. die Signale von mehreren gleichzeitig sendenden Transpondern nicht separiert und ausgewertet werden können.

Aufgabe der vorliegenden Erfindung ist es daher, einen Transponder und ein Datenkommunikationssystem zur zuverlässigen berührungslosen Datenkommunikation auch für die Fälle anzugeben, wenn sich mehr als ein Transponder im Feldbereich des Lesegerätes befinden.

Die Erfindung ist im Patentanspruch 1 beschrieben. Die Unteransprüche enthalten vorteilhafte Ausgestaltungen und Weiterbildungen der Erfindung.

Gegenüber dem einfachen Transpondersystem aus der eingangs genannten Firmenschrift erwartet der erfindungsgemäße Transponder eine Anregung durch ein moduliertes elektromagnetisches Feld, dessen Modulationsinformation zumindest eine Rufkennung enthält. Zusätzliche Informationen im modulierten Feld des Lesegeräts sind zuverlässig. Die zur Extraktion der Information aus der Feldmodulation sind dem Fachmann geläufig.

Wenn im folgenden ein Lesegerät erwähnt ist, soll dies nicht die Funktion des Empfangs eines Signals durch dieses Gerät eingeschränkt sein, sondern allgemein dem bidirektionalen Datenaustausch zwischen einem Transponder und dem Lesegerät umfassen und auch eine Veränderung eines Speicherinhalts des Transponders durch ein vom Lesegerät übertragenes Signal mit einschließen.

Es wird angenommen, daß prinzipiell jeder Transponder über seine vollständige Transponderkennung eindeutig identifizierbar und somit durch ein Lesegerätsignal mit einer Rufkennung, die vollständig mit dieser Transponderkennung übereinstimmt, allein ansprechbar ist. Die Prüfung ob sich ein ganz bestimmtes individueller Transponder im aktiven Antennenfeld (Feldbereich) befindet, kann somit durch eine vollständig mit der Transponderkennung übereinstimmende Rufkennung einfach erfolgen.

Der Regelfall beim Einsatz von Transpondern ist hingegen der Versuch, einen a priori unbekannten Transponder zu identifizieren. Im Falle mehrerer gleichzeitig im Feldbereich des Lesegeräts befindlicher Transponder ergeben sich die eingangs geschilderten Probleme.

Der erfindungsgemäße Transponder ermöglicht nun eine Abfragestrategie, mit welcher dieses Problem auf einfache Weise zuverlässig gelöst wird. Wesentlich bei der Erfindung ist, daß unter den für die Besetzung der einzelnen Stellen der Transponderkennung und der Rufkennung zulässigen Werten mindestens ein Wert als Ersatzwert reserviert ist, welcher jeden der anderen zulässigen Werte, die im folgenden als Kennwerte bezeichnet sind, beim Kennungsvergleich ersetzen kann (Jokerwert). Als Stellen einer Kennung können mehrere Modulationsschritte eines Signals zusammen betrachtet werden, beispielsweise ergeben sich durch blockweise Betrachtung von drei Schritten eines binär modulierten Signals als eine Kennungsstelle acht zulässige Werte für eine Kennungsstelle, z.B. durch Ziffern 0 bis 7 repräsentiert, wobei beispielsweise "0" als Ersatzwert reserviert sei, so daß sieben zulässige Kennwerte "1" bis "7" verfügbar sind. (Verschiedene Betrachtungsweisen der Stellenbildung aus Modulationsschritten sind ineinander überführbar und jeweils auf die Binärdarstellung rückführbar; die Stellendefinition ist lediglich der Anschaulichkeit halber gewählt). Der Ersatzwert kann sowohl in der Rufkennung als auch in der gespeicherten Transponderkennung auftreten.

Die im Transponder aus dem empfangenen Signal rückgewonnene Rufkennung kann nun an jeder Stelle einen der Kennwerte oder den Ersatzwert aufweisen. Der Vergleicher prüft die Rufkennung und die Transponderkennung an allen Stellen eines fest oder auch variabel vorgebbaren Prüfabschnitts auf stellenweise Übereinstimmung, wobei Übereinstimmung auch festgestellt wird, wenn sich ein Ersatzwert und ein beliebiger Kennwert gegenüberstehen. Der Prüfabschnitt kann sich über die gesamte Länge der Transponderkennung erstrecken oder auch nur einen Teil dieser Länge umfassen, dann vorzugsweise den Anfang der Kennung einschließend.

Eine einen oder mehrere Ersatzwerte enthaltende Rufkennung kann somit mehrere Transponder aus einer durch die Kennungslänge festgelegten Menge gleichzeitig ansprechen, was aber gemäß der Problemstellung zu einem nicht direkt auswertbaren Gemisch von Antwortsignalen führen würde. Die Erfindung macht sich Kenntnisse über die Korreliertheit oder Unkorreliertheit der Kennungen von evtl. gleichzeitig im Feldbereich des Lesegeräts auftretender Transponder zunutze. So kann bei gänzlich unkorrelierten Transponderkennungen ein einziger Kennwert neben lauter Ersatzwerten in der Rufkennung ausreichen, um aus einer kleinen Zahl von Transpondern diese einzeln ansprechen zu können, beispielsweise beim Sortieren von Paketen nach Zielorten in einer Annahmestelle, wenn die Zielortkennung Bestandteil der Transponderkennung ist. Andererseits kann eine hohe Korrelation vorliegen, wenn z.B. beim Gepäcktransport im Flugverkehr eine Gruppe von Gepäckstücken auf das Vorliegen eines Irrläufers geprüft werden soll. Hier ist es dann zweckmäßig, die i.a. geringe Anzahl von falschen möglichen Zielortkennungen in Rufkennungen die im übrigen nur Ersatzwerte enthalten, durchzuprüfen. Bei festgestellter Übereinstimmung von Rufkennung und Transponderkennung wird eine vorgebbare Funktion ausgelöst, insbesondere die Aussendung des Inhalts eines Nutzspeichers.

Für eine effektive Strategie bei der Identifizierung oder Gruppenzuordnung eines zuvor unbekannten Transponders ist es vorteilhaft, in einem ersten Abfrageschritt eine Rufkennung hoher Vieldeutigkeit einzusetzen, d. h. eine Rufkennung die wenig Kennwerte aufweist. Im Extremfalls kann eine solche erste Rufkennung ausschließlich aus Ersatzwerten bestehen, was insbesondere von Vorteil ist, wenn der Fall des gleichzeitigen Auftretens mehrerer Transponder im Feldbereich nur selten zu erwarten ist. Eine Rufkennung mit lauter Ersatzwerten ist dann vergleichbar einem unmodulierten Feld des Lesegeräts. Anstelle einer nur Ersatzwerte enthaltenden Rufkennung kann daher als erstes Abfragesignal auch ein unmoduliertes Feld vom Lesegerät abgestrahlt werden. Tritt bei einer solchen Rufkennung ein durch Überlagerung mehrerer Transpondersendesignal nicht auswertbares Empfangssignal am Lesegerät auf, so wird in einem nächsten Schritt die Vieldeutigkeit der Rufkennung verringert, indem die neue Rufkennung beispielsweise weitere Kennwerte oder Kennwerte an anderen Kennungsstellen enthält.

Das Empfangssignal des Lesegeräts wird erneut überprüft, ob
a) mehrere Transponderantwortsignale enthalten sind; dann wird die Vieldeutigkeit weiter verringert
b) nur ein Transponderantwortsignal enthalten ist; dann wird dieses ausgewertet, anschließend werden die alternativen Rufkennungen gleicher Vieldeutigkeit abgeprüft
c) kein Transponderantwortsignal auftritt, dann werden die alternativen Rufkennungen gleicher Vieldeutigkeit überprüft.

Die bei festgestellter Übereinstimmung von Rufkennung und Transponderkennung ausgelöste Funktion besteht beispielsweise darin, den Inhalt eines Nutzspeichers oder einen Teil dieses Inhalts als Antwortsignal auszusenden wie in dem vorstehenden Beispiel angenommen wurde. Der Inhalt des Nutzspeichers kann dabei ganz oder teilweise mit der Transponderkennung übereinstimmen und Kennungsspeicher und Nutzspeicher können im Umfang dieser Übereinstimmung identisch sein. Eine andere grundlegende Funktion, die bei Übereinstimmung von Rufkennung und Transponderkennung ausgelöst werden können, ist die Freigabe der Auswertung nachfolgender Information des Abfragesignals des Lesegeräts, z.B. durch Interpretation der nachfolgenden Information als auszuführende Anweisung. Ferner kann beispielsweise Länge oder Lage eines weiteren Prüfabschnitts innerhalb der Kennungslänge festgelegt werden. Eine weitere bedeutende Funktion ist die Veränderung des Inhalts von Kennungs- und/oder Nutzspeicher im Transponder.

Sofern gezielt andere Funktionen als das Übertragen eines Speicherinhalts vom Transponder zum Lesegerät ausgelöst werden sollen, ist es von Vorteil, in einem ersten Schritt den Transponder im Feldbereich zu identifizieren oder zu klassifizieren, um die weiteren Maßnahmen gezielt auf den detektierten Transponder abstimmen zu können.

Ein Datenaustauschsystem besteht aus mindestens einem Lesegerät mit dem den vorstehenden Ausführungen entsprechenden Steuer- und Auswerteeinrichtungen, insbesondere Einrichtungen zum Einsetzen von Ersatzwerten in Rufkennungen und Einrichtungen zum Beurteilen und Auswerten von Transponderantwortsignalen, sowie mindestens einem Transponder.

Die Einzelheiten des technischen Aufbaus zur Realisierung von Transponder und Lesegerät sind teilweise aus der eingangs genannten Firmenschrift bekannt und darüberhinaus dem Fachmann anhand der gegebenen Anweisungen geläufig.

## Patentansprüche

1. Transponder mit einer Empfangs- und Sendeantenne der mittels elektromagnetischer Felder mit einem Lesegerät in Wechselwirkung treten und insbesondere Informationen empfangen und/oder aussenden kann, gekennzeichnet durch folgende Merkmale:
a) der Transponder enthält einen Kennungsspeicher in welchem eine mehrstellige Transponderkennung gespeichert ist
b) ein Vergleicher im Transponder vergleicht eine über die elektromagnetischen Felder empfangene mehrstellige Rufkennung mit der gespeicherten Transponderkennung
c) der Vergleicher löst dann eine vorbestimmte Funktion des Transponders aus, wenn in einem vorgegebenen Prüfabschnitt der Kennungen die Rufkennung die selben Werte wie die gespeicherte Transponderkennung oder vereinbarte Ersatzwerte aufweist.

2. Transponder nach Anspruch 1, dadurch gekennzeichnet, daS die ausgelöste Funktion im Aussenden einer in einem Nutzspeicher des Transponders gespeicherten Information besteht.

3. Transponder nach Anspruch 1, dadurch gekennzeichnet, daß die ausgelöste Funktion im Verändern einer in einem Nutzspeicher des Transponders enthaltenen Information besteht.

4. Transponder nach Anspruch 1, dadurch gekennzeichnet, daß die ausgelöste Funktion im Festlegen eines Prüfabschnitts besteht.

5. Transponder nach einem der Ansprüche 2 bis 4, dadurch gekennzeichnet, daß Nutzspeicher und Kennungsspeicher abschnittsweise oder vollständig identisch sind.

6. Datenkommunikationssystem mit einem Lesegerät und mindestens einem Transponder nach einem der vorhergehenden Ansprüche.

7. Datenkommunikationssystem nach Anspruch 6, dadurch gekennzeichnet, daß das Lesegerät in einem ersten Abfrageschritt eine erste Rufkennung aussendet, welche gegenüber einer individualisierenden vollständigen Rufkennung mehr Ersatzwerte enthält, daß vom Lesegerät ein ggf. eintreffendes Antwortsignal daraufhin überprüft wird, ob
a) das Antwortsignal Informationen von mehreren Transpondern enthält, worauf eine neue Rufkennung ausgesandt wird, welche gegenüber der vorhergehenden Rufkennung weniger Ersatzwerte enthält, und erneut das Antwortsignal geprüft wird
b) das Antwortsignal Informationen von nur einem Transponder enthält, worauf eine für den festgestellten Transponder ggf. vorgesehene Maßnahme eingeleitet wird.

8. Datenkommunikationssystem nach Anspruch 7, dadurch gekennzeichnet, daß die erste Rufkennung nur Ersatzwerte enthält.
